Europäisches Patentamt

(19) European Patent Office

Office européen des brevets

(11) Publication number: 0 368 335
A2

## (12) EUROPEAN PATENT APPLICATION

(21) Application number: 89120884.5

(51) Int. Cl.5: G02B 27/28

(22) Date of filing: 10.11.89

(30) Priority: 11.11.88 JP 283814/88
11.11.88 JP 283815/88
07.09.89 JP 230453/89

(43) Date of publication of application:
16.05.90 Bulletin 90/20

(84) Designated Contracting States:
DE FR GB SE

(71) Applicant: FUJITSU LIMITED
1015, Kamikodanaka Nakahara-ku
Kawasaki-shi Kanagawa 211(JP)

(72) Inventor: Naganuma, Norihisa
Friend Heights 102 6733-2, Moto-Ishikawa
Midori-ku Yokohama-shi, Kanagawa 227(JP)
Inventor: Takamatsu, Hisashi
458-3-1004, Shiboguchi Tatsu-ku
Kawasaki-shi Kanagawa 213(JP)
Inventor: Abe, Kenichi
1-1-31-203, Fukami-Higashi
Yomato-shi Kanagawa 242(JP)

(74) Representative: Lehn, Werner, Dipl.-Ing. et al
Hoffmann, Eitle & Partner Patentanwälte
Arabellastrasse 4
D-8000 München 81(DE)

(54) Polarization beam coupler adapted to produce output beam for monitoring.

(57) A polarization beam coupler adapted to produce an output light beam for monitoring is disclosed. The polarization beam coupler includes a polarization beam coupling cube (22) for coupling two incident light beams having polarization planes perpendicular to each other and projecting the coupled light beams on the same optic axis (21), a beam splitting cube (24) having a beam splitting film (23) formed from a dielectric multi-layer or single-layer film for extracting a monitor beam, and a quarter-wave plate (25) interposed between the polarization beam coupling cube (22) and the beam splitting cube (24) such that incident light beams to the beam splitting cube (24) may be circularly polarized light. Due to the construction, the output level of a monitor light beam can be prevented from depending upon the polarization planes of the incident light.

# FIG.4

## POLARIZATION BEAM COUPLER ADAPTED TO PRODUCE OUTPUT BEAM FOR MONITORING

### Background of the Invention

This invention relates to a polarization beam coupler for coupling two light beams having polarization planes perpendicular to each other, and more particularly to a polarization beam coupler suitable to produce an output beam to be monitored.

When it is attempted to double a light source on the sending side in order to construct a highly reliable optical fiber communications system, two light sources are constructed such that an emergent light beam of each of them may be coupled to an optical transmission line, and at an initial stage after starting of operation of the system, only one of the light sources is used, but if the light source should fail, the other light source is alternatively used to prevent a system down which will otherwise take place. A polarization beam coupler is used in a highly reliable system of the type just mentioned to couple emergent light beams from two light sources to a common optical transmission line. By the way, with regard to a light source on the sending side, it is necessary to split part of an emergent light beam to monitor the emergent light beam in order to supervise, for example, age deterioration of the light source. Accordingly, a polarization beam splitter is demanded which produces an emergent light beam which can be monitored well.

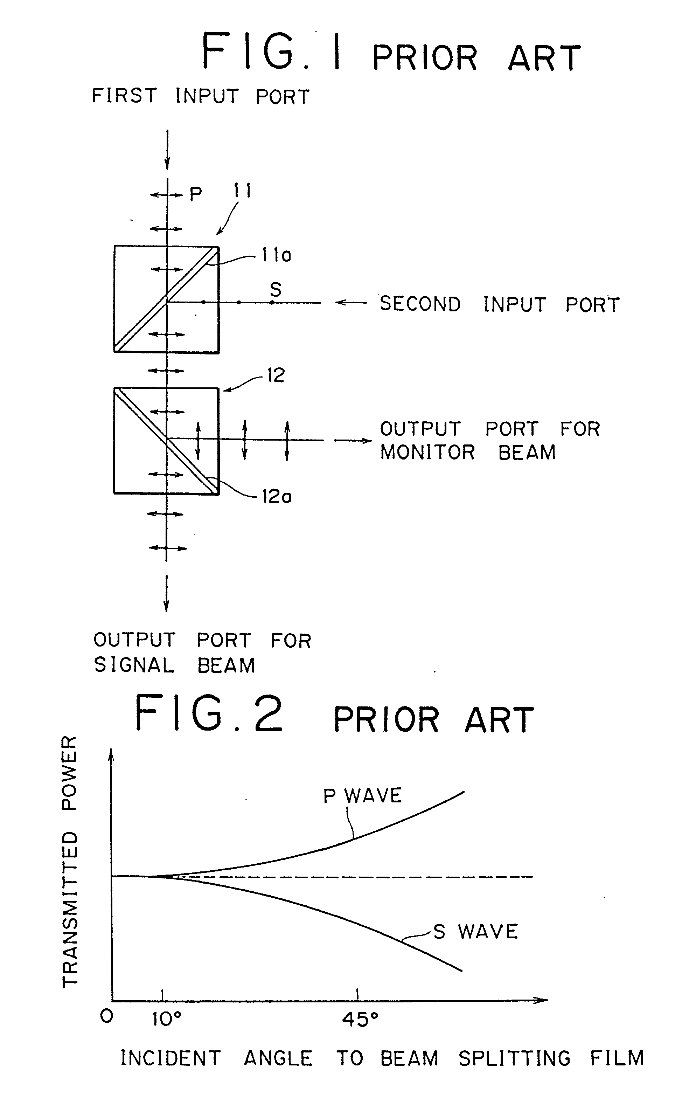

Fig. 1 is a schematic illustration showing general construction of a conventional polarization beam coupler. Referring to Fig. 1, the polarization beam coupler shown includes a polarization beam coupling cube 11 having thereon a polarization beam coupling film 11a formed from a dielectric multi-layer film or the like. By using a cube of such construction, two incident light beams having polarization planes perpendicular to each other can be projected on the same optic axis. In particular, a P wave from a first input port wherein the polarization plane thereof which is an oscillation plane of an electric field vector is parallel to a plane of incidence to the polarization beam coupling film 11a passes through the polarization beam coupling film 11a, but an S wave from a second input port wherein the polarization plane thereof is perpendicular to the plane of incidence to the polarization beam coupling film 11a is reflected by the polarization beam coupling film 11a, and the transmission light and the reflection light emerge on the same optic axis.

The polarization beam coupler further includes a beam splitting cube 12 for extracting a monitor beam from an emergent beam of the polarization beam coupling cube 11 emerging on the same optic axis. The beam splitting cube 12 normally includes a beam splitting film 12a formed from alternate layers of a metal and $SiO_2$ in order to suppress the polarization plane dependency. One of incident light beams to the beam splitting cube 12 which has passed through the beam splitting film 12a is introduced into an optical transmission line from an output port for a signal beam, but the other of the incident light beams to the beam splitting cube 12 which has been reflected by the beam splitting film 12a is introduced into a suitable photo-detector from an output port for a monitor beam so that it may be used for monitoring of the output beam level, feedback control and so forth.

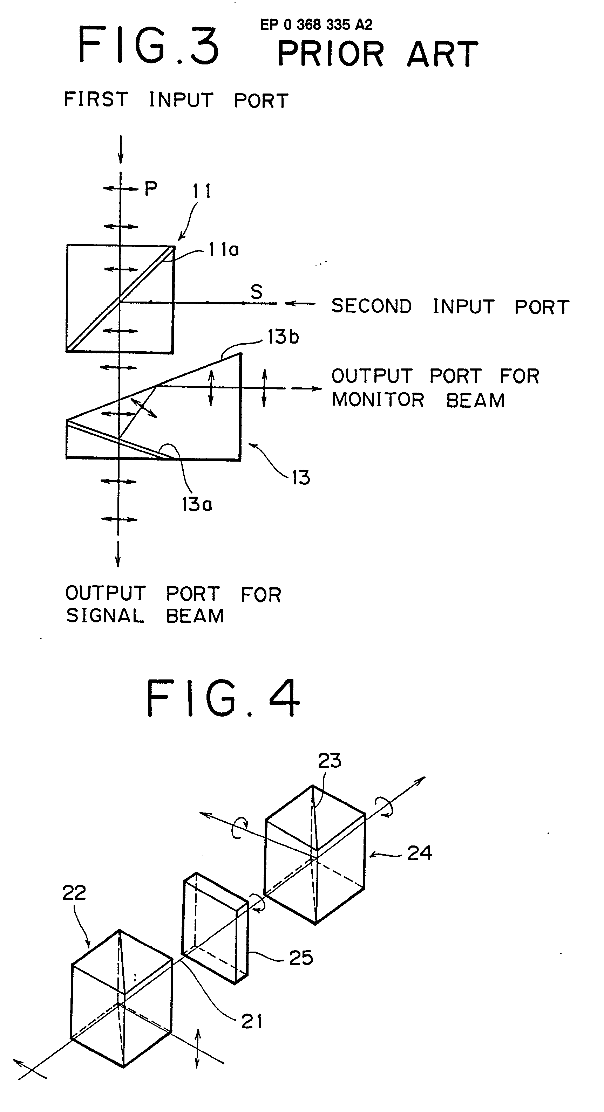

However, where the beam splitting film 12a includes a metal film, there is a problem that the absorption loss at the beam splitting film 12a is so great that, when a monitor beam of a predetermined level is to be extracted, the level of a signal beam coupled to an optical transmission line is deteriorated. In consideration of the matter, it may seem recommendable to employ, for such beam splitting film 12a, a dielectric multi-layer film composed of alternate layers of $Al_2O_3$ and $TiO_2$. In this instance, however, distinct from the case wherein a beam splitting film includes a metal film, the polarization dependency of the transmitted power of the beam splitting film 12a is extremely high at an angle of 45 degrees which is advantageous in construction of an optical device as an incident angle to the beam splitting film 12a as shown in Fig. 2. Accordingly, where a dielectric multi-layer film is employed for a beam splitting film, such a construction as shown in Fig. 3 is adopted.

Referring to Fig. 3, the conventional device shown employs, in order to reduce the polarization dependency of the transmitted power of a beam splitting film, a beam splitting prism 13 having such a construction that the incident angle to a beam splitting film 13a thereof may be sufficiently small as 10 degrees or so. Thus, a monitor beam reflected by and extracted from the beam slitting film 13a is further reflected by a total reflection face 13b of the beam splitting prism 13 in order to extract the monitor beam to the outside. The reason why a monitor beam is reflected by the total reflection face 13b in this manner is that the monitor beam is introduced at an angle proximate to the right angle into the beam splitting film 13a and if it is not reflected otherwise by the total reflection face 13b, then a light beam reflected by the beam splitting film 13a will be intercepted by the polarization beam coupling cube 11a so that it cannot be monitored by a photo-director. Accordingly, a conventional device having such a construction as described above has problems that the structure of a beam splitting prism is complicated and that cumbersome adjustment of an optic axis is required.

As described hereinabove, where a beam splitting film is formed from a dielectric multi-layer film, it is used commonly at such an angular disposition at which it does not have a polarization dependency. In a conventional device of such construction, the amount of light of a monitor beam extracted from an incident light beam from a first input port and the amount of light of a monitor beam extracted from an incident light beam from a second input port present a ratio of about 1:1, and it is a problem that it is difficult to change the ratio to an arbitrary value.


Summary of the Invention


Accordingly. it is an object of the present invention to provide a polarization beam coupler of a simplified construction wherein the loss by absorption is low and the output level of a monitor beam does not depend upon a polarization plane of an incident light beam.

It is another object of the present invention to provide a polarization beam coupler wherein the ratio in amount of light between a monitor beam to be extracted from an incident light beam and another monitor beam to be extracted from another incident light beam can be changed arbitrarily.

According to an aspect of the present invention, there is provided a polarization beam coupler adapted to produce an output beam for monitoring, which comprises a polarization beam coupling means for coupling two incident light beams having planes of polarization perpendicular to each other and projecting the coupled light beams on the same optic axis, a beam splitting means disposed on the optic axis of the polarization beam coupling means for extracting a monitor beam, the beam splitting means having a beam splitting film formed from a dielectric film, and a quarter-wave plate interposed between the polarization beam coupling means and the beam splitting means such that incident light beams to the beam splitting means may be circularly polarized light.

The polarization beam coupling means may be constructed either from a polarization beam coupling cube which is composed of two triangular prisms adhered to each other with a polarization beam coupling film interposed on an interface therebetween or from a polarization beam coupling prism unit which is composed of a parallelogram prism and a triangular prism adhered to the parallelogram prism with a polarization beam coupling film interposed on an interface therebetween. Meanwhile, the beam splitting means may be constructed either from a beam splitting cube composed of two triangular prisms adhered to each other with a beam splitting film interposed on an interface therebetween or from a beam splitting prism unit which is composed of a parallelogram prism and a triangular prism adhered to the parallelogram prism with a beam splitting film interposed on an interface therebetween.

According to another aspect of the present invention, there is provided a polarization beam coupler adapted to produce an output beam for monitoring, which comprises a polarization beam coupling means for coupling two incident light beams having planes of polarization perpendicular to each other and projecting the coupled light beams on the same optic axis, a beam splitting means disposed on the optic axis of the polarization beam coupling means for extracting a monitor beam, the beam splitting means having a beam splitting film having a polarization dependency and formed from a dielectric film, and a polarization plane rotating means disposed between the polarization beam coupling means and the beam splitting means.

The polarization plane rotating means may be formed either from a Faraday rotator or a half-wave plate disposed for rotation.

According to a further aspect of the present invention, there is provided a polarization beam coupler adapted to produce an output beam for monitoring which includes a polarization beam coupling means for coupling two incident light beams having planes of polarization perpendicular to each other and projecting the coupled light beams on the same optic axis, and a beam splitting means disposed on the optic axis of the polarization beam coupling means for extracting a monitor beam, the beam splitting means including a beam splitting film, the polarization beam coupler being characterized in that the beam splitting film is formed from a dielectric film, and the beam splitting means is disposed such that the plane of incidence to the beam splitting film makes an angle of 45 degrees with respect to the polarization planes of the two incident light beams.

The above and other objects, features and advantages of the present invention and the manner of realizing them will become more apparent, and the invention itself will best be understood, from a study of the following description and appended claims, with reference had to the attached drawings showing some preferred embodiments of the invention.

## Brief Description of the Drawings

Fig. 1 is a schematic illustration showing general construction of a conventional polarization beam coupler;

Fig. 2 is a graph illustrating a polarization dependency of a beam splitting film;

Fig. 3 is a schematic illustration showing general construction of another conventional polarization beam coupler;

Fig. 4 is a schematic view illustrating the principle of an aspect of the present invention;

Fig. 5 is a diagrammatic representation showing an index ellipsoid where a birefringent crystal constituting a quarter-wave plate is composed of a positive uniaxial crystal;

Fig. 6 is a plan view of a polarization beam coupler according to a first embodiment of the present invention;

Fig. 7 is a plan view of a polarization beam coupler according to a second embodiment of the present invention;

Fig. 8 is a perspective view of a polarization beam coupling prism unit of the polarization beam coupler of Fig. 7;

Fig. 9 is a graph showing a relationship between a transmitted power of and an incident angle to a beam splitting film in the polarization beam couplers shown in Figs. 6 and 7;

Fig. 10 is a view similar to Fig. 4 but illustratively showing the principle of another aspect of the present invention;

Fig. 11A is a plan view of a polarization beam coupler according to a third embodiment of the present invention;

Fig. 11B is a view as viewed in the direction of an arrow mark B in Fig. 11A;

Fig. 11C is a view as viewed in the direction of an arrow mark C in Fig. 11A;

Fig. 12 is a plan view of a polarization beam coupler according to a fourth embodiment of the present invention;

Fig. 13 is a schematic perspective view of the polarization beam coupler of Fig. 12 when the optic axis of a half-wave plate coincides with a polarization plane of an S wave;

Figs. 14A and 14B are diagrammatic illustrations showing rotational angles of polarization planes when the optic axis of the half-wave plate shown in Fig. 13 is rotated by 22.5 and 45 degrees, respectively;

Fig. 15 is a graph illustrating a relationship between a rotational angle and a reflectivity of the half-wave plate where a beam splitting film having a polarization dependency is adopted; and

Fig. 16 is a graph illustrating a characteristic of a beam splitting film having a polarization dependency.

## Description of the Preferred Embodiments

At first, the principle of construction according to an aspect of the present invention will be described with reference to Fig. 4.

A polarization beam coupler includes a polarization beam coupling cube 22 for coupling two incident light beams having polarization planes perpendicular to each other and projecting them on the same optic axis 21. The polarization beam coupler further includes a beam splitting cube 24 disposed on the optic axis 21 of the polarization beam coupling cube 22 for extracting monitor light therefrom. The beam splitting cube 24 includes a beam splitting film 23 formed from a dielectric multi-layer or single-layer film. A quarter-wave plate 25 is interposed between the polarization beam coupling cube 22 and the beam splitting cube 24. Thus, emergent beams of the polarization beam coupling cube 22 are converted into circularly polarized light by the quarter-wave plate 25 and then introduced into the beam splitting cube 24.

The polarization beam coupler of the present invention having such a construction as described above is characterized in that emergent light of the polarization beam coupling cube 22 is changed into circularly polarized light by the quarter-wave plate 25 and introduced into the beam splitting cube 24 so that the transmitted power or the reflected power of the beam splitting film 23 may be free from a polarization dependency.

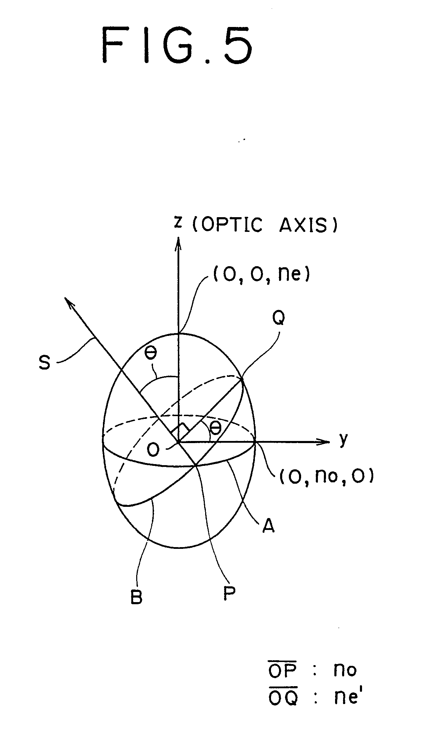

In the following, a function of the quarter-wave plate 25 which is one of components of the polarization beam coupler of the present invention described just above will be described with reference to Fig. 5. It is assumed for convenience here that a birefringent crystal which constitutes the quarter-wave plate 25 is composed of a positive uniaxial crystal. Now, the refractive index of the quarter-wave plate 25 with respect to an ordinary ray is represented by $n_o$, and the maximum value of the refractive index with respect to an extraordinary ray is represented by $n_e$ ($n_o < n_e$). Further, it is assumed that light propagates in the direction indicated by an arrow mark S at the origin O of a rectangular three-dimensional coordinate system wherein the optic axis of the quarter-wave plate 25 is the z-axis, and a projection of the arrow mark S on the xy plane coincides with the y-axis.

In this instance, an index ellipsoid is represented by

$$x^2/n_o^2 + y^2/n_o^2 + z^2/n_e^2 = 1$$

The refractive index with respect to an ordinary ray is constant and represented by a distance OP from the origin O to a point P at which a circle A formed by cutting the index ellipsoid along the xy plane and an ellipse B formed by cutting the index ellipsoid along a plane perpendicular to the propagating direction S at the origin O intersect with each other. On the other hand, the refractive index $n_e'$ with respect to an extraordinary ray varies in accordance with an angle 0 provided by and between the propagating direction S and the z-axis and is represented by a distance OQ from the origin O to a point Q at which the ellipse B and the yz plane intersect with each other. In short, the refractive index $n_e'$ with respect to an extraordinary ray varies continuously from $n_o$ to $n_e$ in accordance with the propagating direction S of light.

Since the refractive index with respect to an extraordinary ray varies in accordance with the propagating direction S of light in this manner, incident beams to the beam splitting cube 24 can be converted into circularly polarized light by disposing the quarter-wave plate 25 in the following manner. At first, the optic axis of the quarter-wave plate 25 formed from a birefringent crystal is set such that the propagating direction S may coincide with the y-axis (0 = 90 degrees) in order to maximize the difference between a refractive index with respect to an ordinary ray and a refractive index with respect to an extraordinary ray. Subsequently, the optic axis of the quarter-wave plate 25 is re-set such that the polarization planes of two emergent beams from the polarization beam coupling cube 22 which have polarization planes perpendicular to each other may be inclined by 45 degrees with respect to the polarization direction OP of an ordinary ray and the polarization direction OQ of an extraordinary ray in order to make magnitudes of an ordinary ray component and an extraordinary ray component equal to each other. Where the optic axis is set in this manner, incident light beams to the beam splitting cube 24 can be converted into circularly polarized light.

In this instance, if the light beams incident to the quarter-wave plate 25 are not linearly polarized light, they cannot be converted into perfectly circularly polarized light. While polarization beams incident to the polarization beam coupling cube 22 are in fact somewhat elliptically polarized light, after they passes through the polarization beam coupling film, they make linearly polarized light having a high polarization extinction ratio (20 dB or more). Therefore, according to the construction described above, circularly polarized light can be introduced into the beam splitting cube 24 irrespective of polarization conditions of polarization beams before they are introduced into the polarization beam coupling cube 22.

When incident beams to the beam splitting cube 24 are converted into circularly polarized light, since a P wave component and an S wave component incident to the beam splitting film 23 have equal magnitudes while there is a difference in phase, even if the incident angle to the beam splitting film 23 is set to 45 degrees or so, there is no possibility that a polarization dependency may occur in the transmitted power or the reflected power. Accordingly, it is not necessary to employ a complicated construction for the beam splitting cube 24. The reason why a dielectric multi-layer or single-layer film is employed for the beam splitting film 23 of the beam splitting cube 24 in the present invention is that it is intended to reduce the absorption loss by the beam splitting film 23.

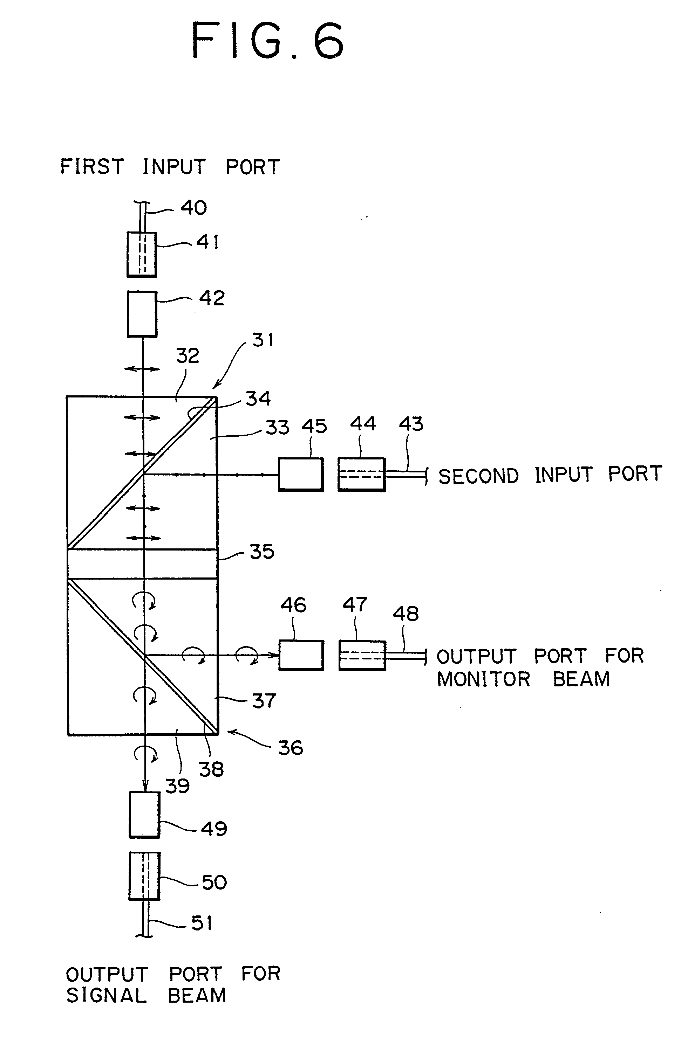

Referring now to Fig. 6, there is shown a first embodiment of the present invention constructed in accordance with the principle described above. A polarization beam coupler includes a polarization beam coupling cube 31 which is composed of two triangular prisms 32 and 33 and a polarization beam coupling film 34 formed from a dielectric multi-layer or single-layer film and interposed between inclined faces of the triangular prisms 32 and 33. The polarization beam coupler further includes a quarter-wave plate 35 formed from a birefringent crystal having a predetermined thickness, and a beam splitting cube 36 composed of two triangular prisms 37 and 39 and a beam splitting film 38 formed from a dielectric multi-layer or single-layer film and interposed between inclined faces of the two triangular prisms 37 and 39. The polarization beam coupling cube 31, quarter-wave plate 35 and beam splitting cube 36 are secured to each other using an optical bonding agent to unite them as a unitary member.

A first input port is constituted such that emergent light of a polarization preserving optical fiber 40 securely inserted in a ferrule 41 may be substantially collimated by a GRIN rod lens 42. Emergent light of the GRIN rod lens 42 is introduced at an incident angle of, for example, 45 degrees into the polarization beam coupling film 34 and has a polarization plane parallel to the plane of incidence. A second input port is constituted such that emergent light of another polarization preserving optical fiber 43 securely inserted in another ferrule 44 may be substantially collimated by another GRIN rod lens 45. Emergent light of the GRIN rod lens 45 is introduced at an incident angle of, for example, 45 degrees into the polarization beam coupling film 34 and has a polarization plane perpendicular to the plane of incidence. Further, the optical path of light reflected by the polarization beam coupling film 34 coincides with the optical path of transmission light from the first input port.

The quarter-wave plate 35 is formed from a birefringent crystal and the optic axis thereof is set such that the polarization planes of two incident beams thereto may make an angle of 45 degrees with respect to polarization planes of light beams which make an ordinary ray and an extraordinary ray with respect to the birefringent crystal. Consequently, two linearly polarized light beams introduced on the same optic axis into the quarter-wave plate 35 are individually converted into circularly polarized light. As a result, even where a dielectric multi-layer or single-layer film is employed as the beam splitting film 38 of the beam splitting cube 36 as in the present embodiment, the incident angle to the beam splitting film 38 can be set to 45 degrees or so because the splitting ratio does not depend upon the polarization directions.

Circularly polarized light passing through the beam splitting film 38 and emerging from the beam splitting cube 36 is focused by a GRIN rod lens 49 and coupled to an optical fiber 51 securely inserted in a ferrule 50. Meanwhile, circularly polarized light reflected by the beam splitting film 38 and emerging from the beam splitting cube 36 is focused by another GRIN rod lens 46 and coupled to an optical fiber 48 securely inserted in another ferrule 47. A light beam introduced into the optical fiber 51 can be sent out as a main signal into an optical transmission line while another light beam introduced into the optical fiber 48 can be used as a monitor beam for supervision of age deterioration or the like of a laser diode for the light source.

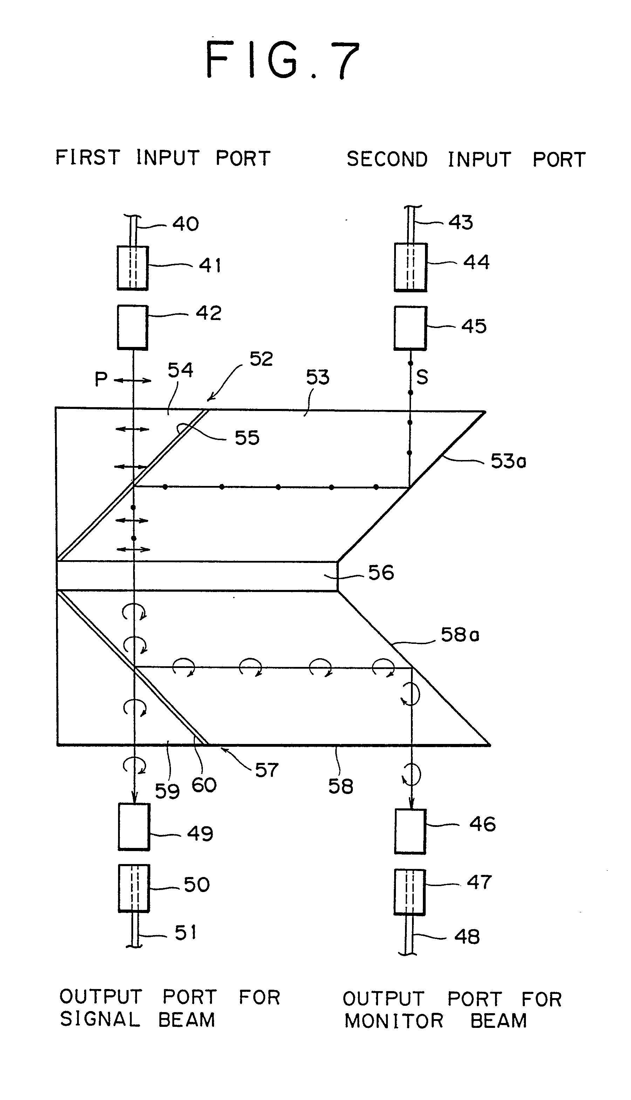

Referring now to Fig. 7, there is shown in plan a polarization beam coupler according to a second embodiment of the present invention. It is to be noted that substantially like parts to those of the first embodiment described above are denoted by like reference numerals and description thereof may be partially omitted herein to avoid redundancy. In the present embodiment, a polarization beam coupling prism unit 52 and a beam splitting prism unit 57 are employed in place of the polarization beam coupling cube 31 and the beams splitting cube 36, respectively, of the first embodiment described above. The polarization beam coupling prism unit 52 is composed of a parallelogram prism 53 and a triangular prism 54 adhered to the parallelogram prism 53 with a polarization beam coupling film 55 interposed on an interface between the prisms 53 and 54. Similarly, the beam splitting prism unit 57 is composed of a parallelogram prism 58 and a triangular prism 59 adhered to the parallelogram prism 58 while a beam splitting film 60 formed from a dielectric multi-layer or single-layer film is interposed on an interface between the parallelogram prism 58 and the triangular prism 59.

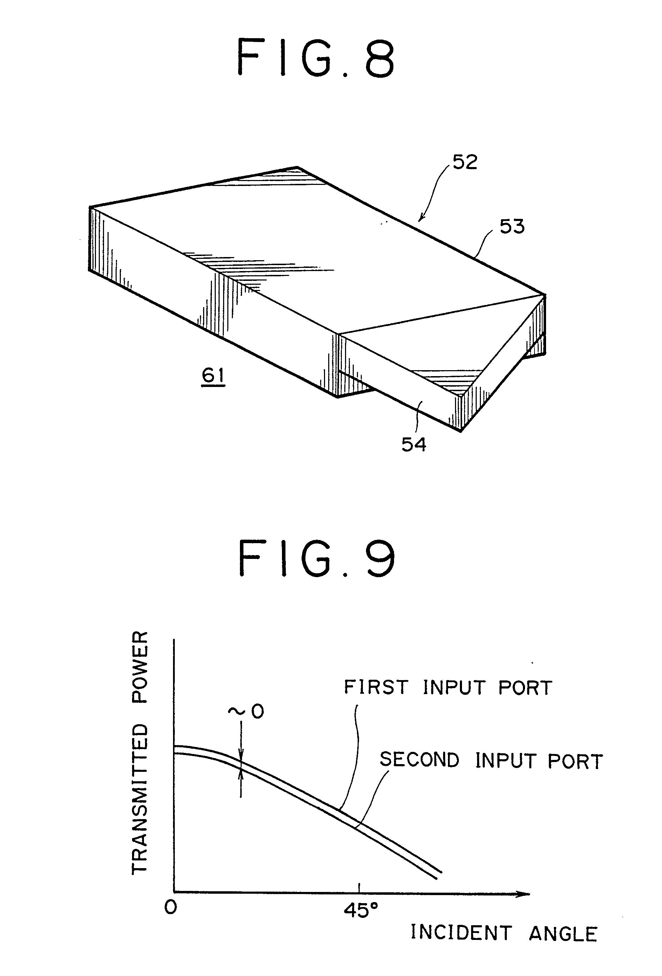

As shown in Fig. 8, the polarization beam coupling unit 52 is constituted such that the parallelogram prism 53 is adhered to a base 61 while the triangular prism 54 is secured to a side face of the parallelogram prism 53 in a spaced relationship from the base 61. Due to such construction, a difference in displacement between individual parts by thermal expansion or the like which may be forecast where the parallelogram prism 53 and the triangular prism 54 are otherwise adhered to the base 61 independently of each other can be absorbed effectively, and exfoliation of the adhered faces of the parallelogram prism 53 and the triangular prism 54 which may arise from such possible difference in displacement between the various parts can be prevented effectively. Also the beam splitting prism unit 57 is constructed in a similar manner, and possible exfoliation at the adhered faces of the parallelogram prism 58 and the triangular prism 59 is prevented effectively.

Referring back to Fig. 7, a quarter-wave plate 56 is sandwiched between and adhered to the polarization beam coupling prism unit 52 and the beam splitting prism unit 57 by means of an optical bonding agent to integrate them as a unitary member. As an alternative, the quarter-wave plate 56 may be adhered to a side face of the polarization beam coupling prism unit 52 or else to a side face of the beam splitting prism unit 57.

Since the polarization beam coupler of the present embodiment has such a construction as described above, a light beam from a second input port can be introduced in parallel to a light beam from a first input port, and an extracting direction of a monitor beam can be made parallel to the transmission direction of a signal beam. A polarization beam introduced by way of the second input port is totally reflected by an inclined face 53a of the parallelogram prism 53 and then introduced into the polarization beam coupling film 55. On the other hand, circularly polarized light reflected by the beam splitting film 60 is totally reflected by an inclined face 58a of the parallelogram prism 58 and coupled to an output port for a monitor beam.

Referring now to Fig. 9, there are illustrated relationships between transmitted powers of and incident angles to the beam splitting films 38 and 60 in the first and second embodiments described hereinabove. It is to be noted that sufficient transmitted powers can be obtained for a light beam from the first input port and another light beam from the second input port at the incident angle of 45 degrees, and little difference occurs between the transmitted powers of both beams. Accordingly, there is no necessity of setting the incident angle to the beam splitting film to a small angle of 10 degrees or so as in a conventional device, and particularly the beam splitting cube 36 and the beam splitting prism unit 57 can be simplified in construction.

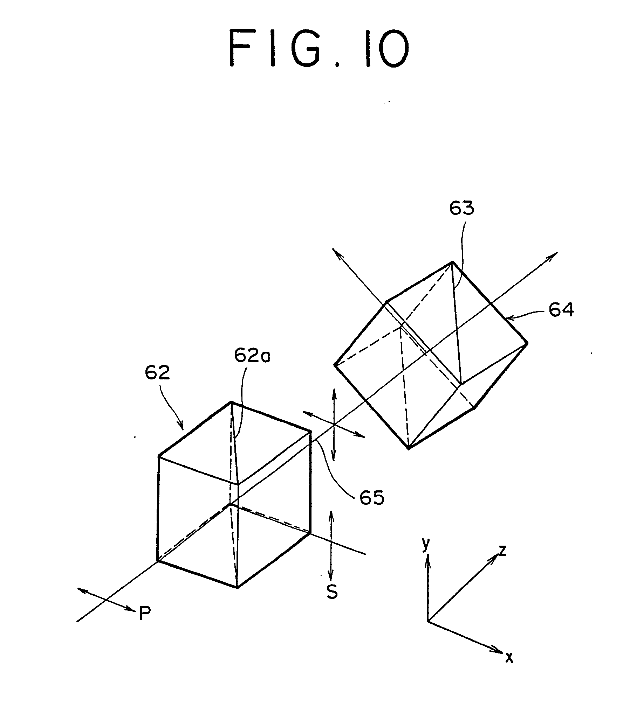

Subsequently, the principle of construction according to another aspect of the present invention will be described with reference to Fig. 10. A polarization beam coupler shown includes a polarization beam coupling cube 62 having a polarization beam coupling film 62a therein. The polarization beam coupling cube 62 couples two incident light beams having polarization planes perpendicular to each other and projects them on the same optic axis 65. The polarization beam coupler further includes a beam splitting cube 64 disposed on the optic axis 65 of the polarization beam coupling cube 62 for extracting a monitor beam. The beam splitting cube 64 includes therein a beam splitting film 63 formed from a dielectric multi-layer or single-layer film. The beam splitting film 64 is disposed such that the plane of incidence to the beam splitting film 63 may make an angle of 45 degrees with respect to the polarization planes of two incident beams.

Now, a rectangular three-dimensional coordinate system (x, y, z) is considered wherein the incident angles to the polarization beam coupling film 62a of two incident beams of light to the polarization beam coupling cube 62 which have mutually perpendicular polarization planes may coincide with the xz plane, and it is assumed that one of the incident light beams which passes through the polarization beam coupling film 62a is a P wave having a polarization plane parallel to the xz plane while the other incident light beam which is reflected by the polarization beam coupling film 62a is an S wave having a polarization plane parallel to the xy plane. It is to be noted that the P wave and the S wave mentioned here denotes a P wave and an S wave with respect to the polarization beam coupling film 62a, respectively. Since the polarization beam coupling cube 62 has a single optic axis of emergent light, if it is assumed here that the optic axis is parallel to the z-axis, then the polarization plane of an emergent light beam is parallel to the xz plane and also to the yz plane. Here, the plane of incidence to the beam splitting film 63 of the beam splitting cube 64 will be examined. Since the plane of incidence makes an angle of 45 degrees with respect to the polarization planes of two incident light beams from the construction of the present invention, the plane of incidence makes an angle of 45 degrees with respect to the xz plane and also to the yz plane. In other words, the plane of incidence to the beam splitting film 63 is parallel to a plane of y = x and also to a plane of y = -x. Consequently, since both polarization components of incident light to the beam splitting film 63 are reflected or transmitted as a P wave or an S wave (with respect to the beam splitting film 63) of the same magnitude, it is prevented that the reflection light level or the transmission light level at the beam splitting film 63 depends upon the polarization plane of the incident light beam. Accordingly, the incident angle to the beam splitting film 63 can be set, for example, to 45 degrees, and the construction of the beam splitting cube 64 can be simplified comparing with the case wherein such incident angle is set to a small angle of 10 degrees or so in the conventional construction.

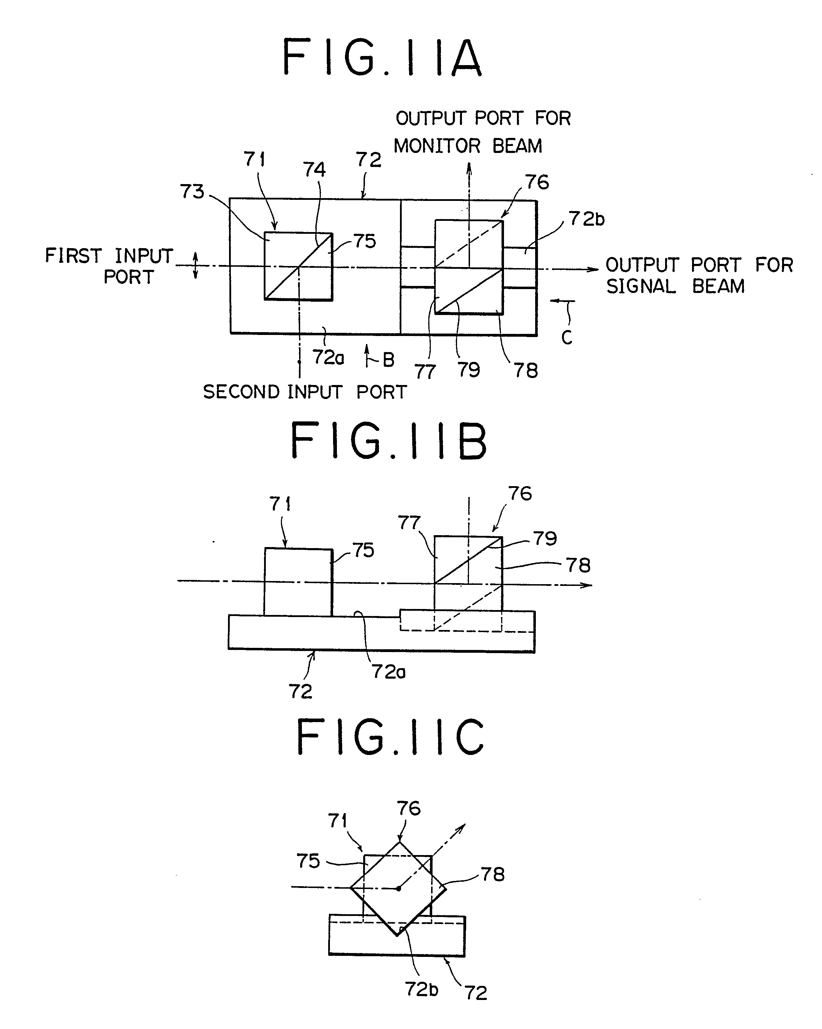

In the following, a third embodiment of the present invention based on the aspect described above will be described with reference to Figs. 11A to 11C. Fig. 11A is a plan view of a polarization beam coupler according to the third embodiment of the present invention; Fig. 11b is a view as viewed in the direction indicated by an arrow mark B in Fig. 11A; and Fig. 11c is a view as viewed in the direction indicated by another arrow mark C in Fig. 11A.

The polarization beam coupler shown includes a polarization beam coupling cube 71 securely disposed on a flat face 72a of a base plate 72 and composed of a pair of transparent triangular prisms 73 and 75 and a polarization beam coupling film 74 formed, for example, from a dielectric multi-layer or single-layer film and interposed between the triangular prisms 73 and 75. The polarization beam coupler further includes a beam splitting cube 76 placed on and secured to a V-shaped groove 72b of the base plate 72. The beam splitting cube 76 is composed of a pair of transparent triangular prisms 77 and 78 and a beam splitting film 79 formed from a dielectric multi-layer or single-layer film and interposed between the triangular prisms 77 and 78.

A light beam from a first input port is adjusted such that the polarization plane thereof may be parallel to the plane of incidence to the polarization beam coupling film 74, and the incident angle is 45 degrees in the present embodiment. Meanwhile, a light beam from a second input port is adjusted such that the polarization plane thereof may be perpendicular to the plane of incidence to the polarization beam coupling film 74, and the incident angle is 45 degrees. Further, the incident positions of the individual light beams are set such that the optical path of transmission light of the light beam from the first input port through the polarization beam coupling film 74 and the optical path of reflected light of the light beam from the second input port by the polarization beam coupling film 74 may coincide with each other.

In the present embodiment, the beam splitting cube 76 disposed on the optic axis of the polarization beam coupling cube 71 has the same configuration as the polarization beam coupling cube 71, and the plane of incidence to the beam splitting film 79 of the beam splitting cube 76 makes an angle of 45 degrees with respect to the polarization plane of a light beam from the first input port and also to the polarization plane of another light beam from the second input port by parallelly moving the beam splitting cube 76 along the optic axis from the position of the polarization beam coupling cube 71 and securing the beam splitting cube 76 at a position rotated by 45 degrees around the optic axis.

Where the polarization beam coupling cube 71 and the beam splitting cube 76 are disposed in such positional relationship, a P wave component and an S wave component with respect to the beam splitting film 79 are equal to each other in regard to reflection by or transmission through the beam splitting film 79. Accordingly, the polarization dependency of the splitting ratio of the beam splitting cube 76 is eliminated. In particular, when a light beam from the first input port is received, the ratio between an output power level at an output port for a signal beam provided on the optical path of transmission light through the beam splitting film 79 and an output power level at an output port for a monitor beam provided on the optical path of reflected right by the beam splitting film 79 coincides with a ratio when a light beam is received from the second input port. Accordingly, in case a light source which employs a laser diode is doubled using such polarization beam coupler, a stable operation before and after changing over of the light source is assured. Further, since there is no necessity of setting the incident angle to the beam splitting film of the beam splitting cube to a small angle of 10 degrees or so as in a conventional device, the beam splitting cube can be simplified in construction.

While the embodiment described above adopts the polarization beam coupling cube 71 and the beam splitting cube 76, it is otherwise possible to adopt such polarization beam coupling prism unit and beam splitting prism unit as shown in Figs. 7 and 8 in place of the cubes 71 and 76, respectively.

In the various embodiments described above, a possible dependency of the signal beam output power level or the monitor beam output power level upon a polarization plane of an incident light beam is prevented by eliminating the polarization dependency of reflected light by and transmission light through a beam splitting film. On the other hand, a fourth embodiment of the present invention which will be described in the following is constituted such that the polarization dependency of a beam splitting film is utilized positively so that the ratio in amount of light between a monitor beam to be extracted from one of two incident light beams and another monitor beam to be extracted from the other incident light beam may be varied arbitrarily.

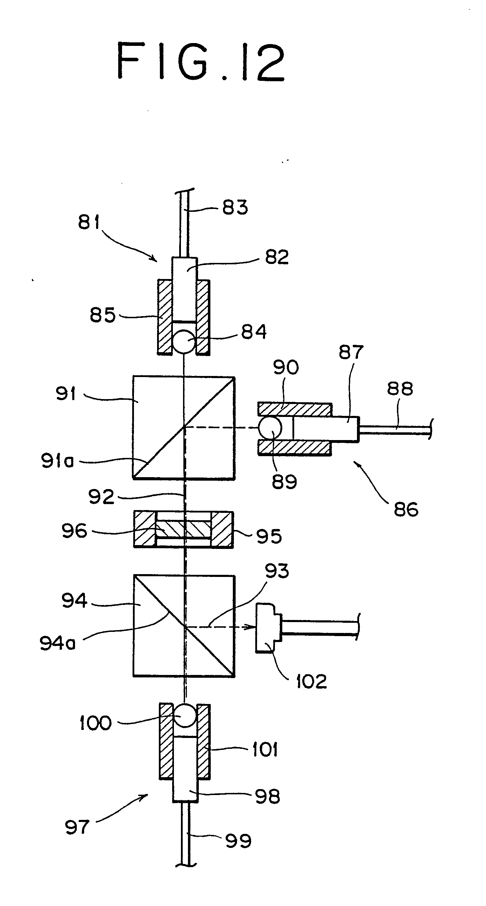

Referring to Fig. 12, there is shown in plan a polarization beam coupler according to the fourth embodiment of the present invention. The polarization beam coupler shown includes a pair of optical fiber assemblies 81 and 86 which include each a polarization preserving optical fiber 83 or 88 secured to a ferrule 82 or 87. a collimator lens 84 or 89, and a holder 85 or 90 to which the polarization preserving fiber 83 or 88 and the collimator lens 84 or 89 are secured in a predetermined positional relationship, respectively. The polarization beam coupler further includes a polarization beam coupling cube 91 having a polarization beam coupling film 91a formed from a dielectric multi-layer or single-layer film. The optical fiber assembly 81 is disposed such that the polarization plane of emergent light thereof may make a P wave with respect to the polarization beam coupling film 91a, that is, the polarization plane may be parallel to the plane of incidence to the polarization beam coupling film 91a while the optical fiber assembly 86 is disposed such that the polarization plane of emergent light thereof may make an S wave with respect to the polarization beam coupling film 91a, that is, the polarization plane may be perpendicular to the plane of incidence to the polarization beam coupling film 91a.

A P wave of emergent light from the polarization preserving fiber 83 is first collimated by the lens 84 and then passes through the polarization beam coupling film 91a while an S wave of emergent light from the polarization preserving fiber 88 is first collimated by the lens 89 and then reflected by the polarization beam coupling film 91a, and the transmission light beam and the reflection light beam are projected on the same optic axis 92.

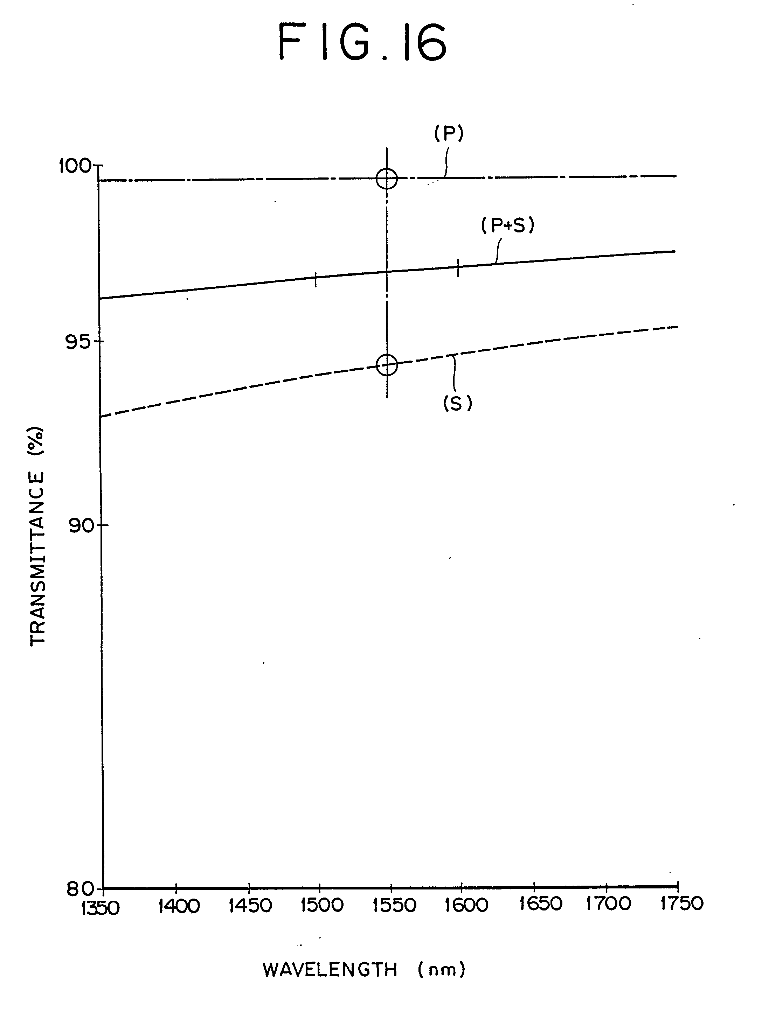

The polarization beam coupler further includes a beam splitting cube 94 for extracting a monitor beam 93 from an emergent beam of the polarization beam coupling cube 91 projected on the optic axis 92. The beam splitting cube 94 includes therein a beam splitting film 94a formed from a dielectric multi-layer or single-layer film. The beam splitting cube 94 has a polarization dependency and has such a characteristic as shown, for example, in Fig. 16. Referring to Fig. 16, a curve denoted by (P) indicates a characteristic of a P wave having a polarization plane parallel to the plane of incidence to the beam splitting film while a curve denoted by (S) indicates a characteristic of an S wave having a polarization plane perpendicular to the plane of incidence to the beam splitting film. Further, a curve denoted by (P + S) indicates a characteristic of circularly polarized light for reference.

Referring back to Fig. 12, the polarization beam coupler further includes a half-wave plate 96 secured to a rotatable holder 95 and interposed for rotation between the polarization beam coupling cube 91 and the beam splitting cube 94. The polarization beam coupler further includes an optical fiber assembly 97 which is composed of a single mode fiber 99 secured to a ferrule 98, a collimator lens 100, and a holder 101 to which the single mode fiber 99 and the coillimator lens 100 are secured in a predetermined positional relationship. The polarization beam coupler further includes a photodiode 102 for receiving a monitor beam.

Light beams coupled by the polarization beam coupling cube 91 and projected on the same optic axis are rotated in polarization plane by a predetermined angle by the half-wave plate 96 and are introduced into the beam splitting cube 94. One of the light beams incident to the beam splitting cube 94 which has passed through the beam splitting film 94a is focused by the lens 100 and introduced into the single mode optical fiber 99 for further transmission. Meanwhile, the other of the light beams incident to the beam splitting cube 94 which has been reflected by the beam splitting film 94a is introduced into the photodiode 102 so that it may be used for monitoring of the output light beam level, feedback control and so forth.

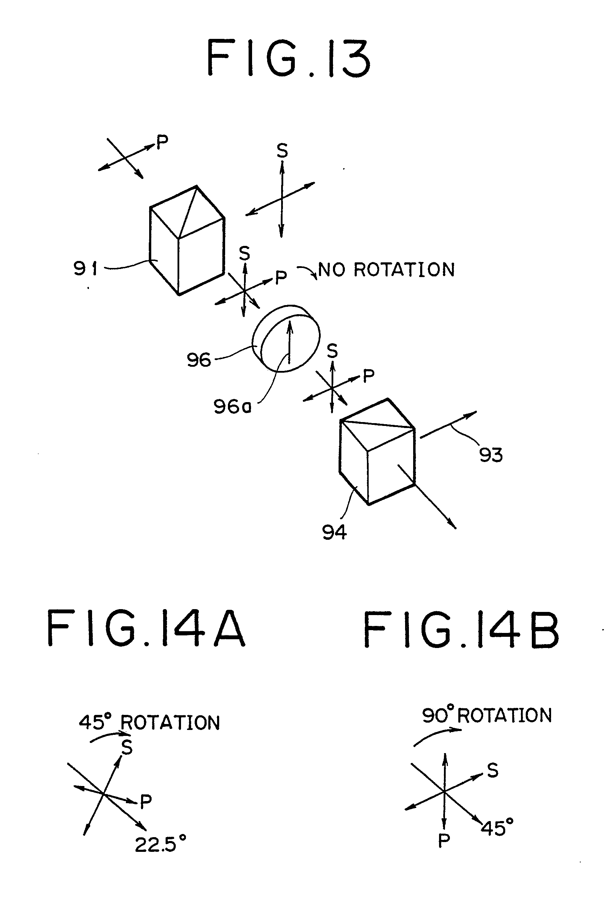

Subsequently, description will be given of how a polarization plane is rotated by rotating the half-wave plate 96 with reference to Figs. 13, 14A and 14B. As shown in Fig. 13, where the optic axis 96a of the half-wave plate 96 coincides with the polarization plane of an S wave, a P wave and an S wave of emergent light from the polarization beam coupling cube 91 are introduced into the beam splitting cube 94 without rotation of the polarization planes thereof. It is to be noted that a P wave and an S wave appearing in Fig. 13 are denoted as such with reference to the polarization beam coupling film 91a of the polarization beam coupling cube 91. Where the optic axis 96a of the half-wave plate 96 is rotated by 22.5 degrees, a P wave and an S wave of emergent light from the polarization beam coupling cube 91 are introduced into the beam splitting cube 94 after the polarization planes thereof are rotated by 45 degrees as shown in Fig. 14A. Where the optic axis 96a of the half-wave plate 96 is rotated by 45 degrees, a P wave and an S wave of emergent light from the polarization beam coupling cube 91 are introduced into the beam splitting cube 94 after the polarization planes thereof are rotated by 90 degrees as shown in Fig. 14B. In this manner, the polarization planes of a P wave and an S wave of emergent light from the beam splitting cube 91 can be varied freely in accordance with a rotational angle of the half-wave plate 96.

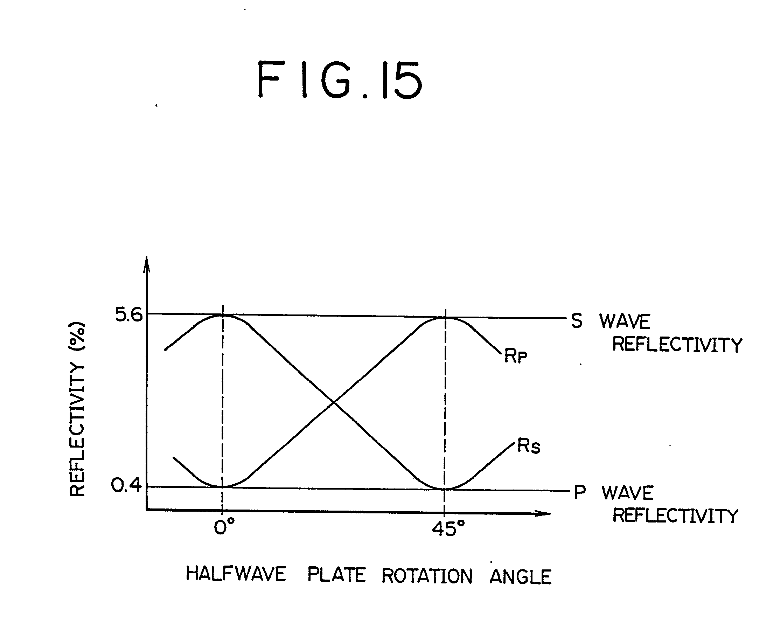

Referring to Fig. 15, there is illustrated a relationship between a rotational angle of the half-wave plate and a reflectivity of the beam splitting film. In Fig 15, a curve $R_p$ indicates a relationship between a rotational angle and a reflectivity with respect to incident light (P wave) from the polarization preserving fiber 83 while a curve $R_S$ indicates a relationship between a rotational angle and a reflectivity with respect to incident light (S wave) from the polarization preserving fiber 88. The characteristic of the beam splitting film used in the polarization beam coupler of the present embodiment is such as shown in Fig. 16, and it can be seen from Fig. 16 that, where the wave length used is 1,550 nm, the reflectivity of a P wave is 0.4 % (transmittance 99.6 %) and the reflectivity of an S wave is 5.6 % (transmittance 94.4 %) and from Fig. 15 that $R_P$ and $R_S$ vary relatively within the range of 0.4 to 5.6 % by rotation of the half-wave plate 96. In this manner, the ratio between a monitor beam to be extracted from an emergent light beam of the polarization preserving fiber 83 and another monitor beam to be extracted from an emergent light beam of the polarization preserving fiber 88 can be changed arbitrarily by rotation of the half-wave plate 96.

As apparently seen from Fig. 15, when the half-wave plate 96 is rotated by 22.5 degrees, the reflectivities of a P wave and an S wave by the beam splitting film 94a become equal to each other, and the output levels of monitor light beams can be maintained fixed irrespective of the polarization planes of incident light beams.

While the polarization beam coupling cube 91 and the beam splitting cube 94 are adopted in the polarization beam coupler of the fourth embodiment shown in Fig. 12, it is possible to otherwise employ such polarization beam coupling prism unit and beam splitting prism unit as shown in Figs. 7 and 8 in place of the cubes 91 and 94, respectively. Where such prism units are used, two incident light beams can be made parallel to each other and the extracting direction of a monitor beam can be made parallel to a signal beam.

Further, while the rotatable half-wave plate is employed as a polarization plane rotating means in the polarization beam coupler of the fourth embodiment described above, it is possible to otherwise employ a Faraday rotator by which a polarization can be changed arbitrarily in response to a magnetic field applied thereto.

Since various changes and modifications of the invention will occur to and can be made readily by those skilled in the art without departing from the concept of the invention, the invention is not to be taken as limited except by the scope of the appended claims.

## Claims

1. A polarization beam coupler adapted to produce an output beam for monitoring, comprising: a polarization beam coupling means for coupling two incident light beams having planes of polarization perpendicular to each other and projecting the coupled light beams on the same optic axis;

a beam splitting means disposed on the optic axis of said polarization beam coupling means for extracting a monitor beam, said beam splitting means having a beam splitting film formed from a dielectric film; and

a quarter-wave plate interposed between said polarization beam coupling means and said beam splitting means such that incident light beams to said beam splitting means may be circularly polarized light.

2. A polarization beam coupler according to claim 1, wherein said polarization beam coupling means is a polarization beam coupling cube while said beam splitting means is a beam splitting cube.

3. A polarization beam coupler according to claim 1, wherein said polarization beam coupling means is a polarization beam coupling prism unit which is composed of a first parallelogram prism and a first triangular prism adhered to said first parallelogram prism with a polarization beam coupling film interposed on an interface therebetween while said beam splitting means is a beam splitting prism unit which is composed of a second parallelogram prism and a second triangular prism adhered to said second parallelogram prism with a beam splitting film interposed on an interface therebetween.

4. A polarization beam coupler according to claim 3, wherein one of the two incident light beams is introduced into said first triangular prism while the other incident light beam is introduced in parallel to the one incident light beam into said first parallelogram prism, and one of the two emergent light beams is projected from said second triangular prism while the other emergent light beam is projected in parallel to the one emergent light beam from said second parallelogram prism.

5. A polarization beam coupler according to claim 3, wherein said first and second parallelogram prisms are adhered to a base while said first and second triangular prisms are adhered to side faces of said first and second parallelogram prisms, respectively, in a spaced relationship from said base.

6. A polarization beam coupler according to claim 2, wherein said quarter-wave plate is adhered to both of said polarization beam coupling cube and said beam splitting cube by means of an optical bonding agent.

7. A polarization beam coupler according to claim 3, wherein said quarter-wave plate is adhered to both of said polarization beam coupling prism unit and said beam splitting prism unit by means of an optical bonding agent.

8. A polarization beam coupler according to claim 3, wherein said quarter-wave plate is adhered to either one of said polarization beam coupling prism unit and said beam splitting prism unit by means of an optical bonding agent.

9. A polarization beam coupler adapted to produce an output beam for monitoring, comprising:

a polarization beam coupling means for coupling two incident light beams having planes of polarization perpendicular to each other and projecting the coupled light beams on the same optic axis;

a beam splitting means disposed on the optic axis of said polarization beam coupling means for extracting a monitor beam, said beam splitting means having a beam splitting film formed from a dielectric film; and

a polarization plane rotating means disposed between said polarization beam coupling means and said beam splitting means.

10. A polarization beam coupler according to claim 9, wherein said beam splitting film is formed from a dielectric film having a polarization dependency.

11. A polarization beam coupler according to claim 10, wherein said polarization plane rotating means is a Faraday rotator.

12. A polarization beam coupler according to claim 10, wherein said polarization plane rotating means is composed of a half-wave, plate disposed for rotation.

13. A polarization beam coupler according to claim 10, wherein said polarization plane rotating means is composed of a half-wave plate secured such that an optic axis thereof is rotated by an angle of 22.5 degrees with respect to the polarization plane of one of the two incident light beams.

14. A polarization beam coupler according to claim 10, wherein said polarization beam coupling means is a polarization beam coupling cube while said beam splitting means is a beam splitting cube.

15. A polarization beam coupler according to claim 10, wherein said polarization beam coupling means is a polarization beam coupling prism unit which is composed of a first parallelogram prism and a first triangular prism adhered to said first parallelogram prism with a polarization beam coupling film interposed on an interface therebetween while said beam splitting means is a beam splitting prism unit which is composed of a second parallelogram prism and a second triangular prism adhered to said second parallelogram prism with a beam splitting film interposed on an interface therebetween.

16. A polarization beam coupler according to claim 15, wherein one of the two incident light beams is introduced into said first triangular prism while the other incident light beam is introduced in parallel to the one incident light beam into said first parallelogram prism, and one of the two emergent light beams is projected from said second triangular prism while the other emergent light beam is projected in parallel to the one emergent light beam from said second parallelogram prism.

17. A polarization beam coupler according to claim 15, wherein said first and second parallelogram prisms are adhered to a base while said first and second triangular prisms are adhered to side faces of said first and second parallelogram prisms, respectively, in a spaced relationship from said base.

18. A polarization beam coupler according to claim 13, wherein said half-wave plate is adhered to both of said polarization beam coupling means and said beam splitting means by means of an optical bonding agent.

19. A polarization beam coupler according to claim 13, wherein said half-wave plate is adhered to either one of said polarization beam coupling means and said beam splitting means by means of an optical bonding agent.

20. In a polarization beam coupler adapted to produce an output beam for monitoring which includes a polarization beam coupling means for coupling two incident light beams having planes of polarization perpendicular to each other and projecting the coupled light beams on the same optic axis, and a beam splitting means disposed on the optic axis of said polarization beam coupling means for extracting a monitor beam, said beam splitting means having a beam splitting film, the improvement wherein
said beam splitting film is formed from a dielectric film; and
said beam splitting means is disposed such that the plane of incidence to said beam splitting film makes an angle of 45 degrees with respect to the polarization planes of the two incident light beams.

# FIG. 1 PRIOR ART

FIRST INPUT PORT

P  11

11a

S ← SECOND INPUT PORT

12

OUTPUT PORT FOR
MONITOR BEAM

12a

OUTPUT PORT FOR
SIGNAL BEAM

# FIG.2 PRIOR ART

P WAVE

S WAVE

O     10°            45°

TRANSMITTED POWER

INCIDENT ANGLE TO BEAM SPLITTING FILM

# FIG.3  PRIOR ART

EP 0 368 335 A2

FIRST INPUT PORT

S ← SECOND INPUT PORT

OUTPUT PORT FOR
MONITOR BEAM

OUTPUT PORT FOR
SIGNAL BEAM

# FIG.4

# FIG.5

$$\overline{OP} \; : \; no$$
$$\overline{OQ} \; : \; ne'$$

# FIG.6

FIRST INPUT PORT

SECOND INPUT PORT

OUTPUT PORT FOR
MONITOR BEAM

OUTPUT PORT FOR
SIGNAL BEAM

# FIG.7

FIRST INPUT PORT          SECOND INPUT PORT

OUTPUT PORT FOR
SIGNAL BEAM

OUTPUT PORT FOR
MONITOR BEAM

# FIG. 8

# FIG. 9

# FIG. 10

# FIG.IIA

OUTPUT PORT FOR
MONITOR BEAM

FIRST INPUT
PORT

OUTPUT PORT FOR
SIGNAL BEAM

71 74 72 76 72b 73 75 77 79 78 72a B C

SECOND INPUT PORT

# FIG.IIB

71 76 77 75 79 78 72 72a

# FIG.IIC

71 76 75 78 72b 72

# FIG.12

EP 0 368 335 A2

# FIG.13

# FIG.14A

45° ROTATION

22.5°

# FIG.14B

90° ROTATION

45°

# FIG.15

# FIG.16